## Europäisches Patentamt
## European Patent Office
## Office européen des brevets

(19)

(11) Publication number: **0 038 627**
**B1**

(12) # EUROPEAN PATENT SPECIFICATION

(45) Date of publication of patent specification: **18.06.86**

(51) Int. Cl.⁴: **C 09 J 3/06**

(21) Application number: **81301210.1**

(22) Date of filing: **20.03.81**

(54) **An adhesive containing starch and a process for producing it.**

(30) Priority: **28.03.80 DK 1343/80**

(43) Date of publication of application:
**28.10.81 Bulletin 81/43**

(45) Publication of the grant of the patent:
**18.06.86 Bulletin 86/25**

(84) Designated Contracting States:
**DE FR IT NL**

(56) References cited:
**FR-A-2 386 593**
**GB-A- 807 505**
**GB-A-1 079 387**
**GB-A-2 023 629**

**TAPPI, vol. 60, no. 4, April 1977, R.H. WILLIAMS et al.: "Influence of carrier starch on green bond strenght in corrugating adhesives" pages 86-89**

(73) Proprietor: **CPC INTERNATIONAL INC.**
**International Plaza P.O. Box 8000**
**Englewood Cliffs New Jersey 07632 (US)**

(72) Inventor: **Kofoed, Hans Henning**
**Kongestien 52**
**DK-2830 Virum (DK)**
Inventor: **Jensen, Per Ole**
**Brydebakken 11**
**DK-3200 Helsinge (DK)**

(74) Representative: **Pennant, Pyers et al**
**Stevens, Hewlett & Perkins 5 Quality Court**
**Chancery Lane**
**London, WC2A 1HZ (GB)**

## Description

The invention relates to an adhesive consisting of starch, water and alkali. It also relates to a process for producing the adhesive. The adhesive is particularly suitable for use as a paste in the making of corrugated cardboard.

At present, corrugated cardboard is made in a continuous process involving several steps. A paper web, slightly wetted, is passed through heated corrugation rolls. Adhesive is applied to the crest of each wave on one side of the heated corrugated paper. Immediately following this, a second paper web is contacted with the waves of the corrugated paper, which have been treated with adhesive, in the presence of heat and pressure, which results in the formation of a strong glue seam. This corrugated cardboard is called single-faced corrugated cardboard by those skilled in the art.

Another type of corrugated cardboard is called double-faced corrugated cardboard. The double-faced cardboard is made by applying adhesive on the wave crests of the single-faced cardboard and subsequently applying a second paper web or substrate on the crests. The substrate may e.g. also be single-faced cardboard, and thus it is possible to make cardboard of any desired thickness. To avoid destroying the single-faced corrugated cardboard during the gluing process, less heat and pressure must be used, and thus greater requirements are made of the adhesive to be used here.

It has been known for several years that adhesives containing starch may be used in the making of corrugated cardboard if at least part of the starch is ungelatinized and it is suspended in an aqueous medium. However, ungelatinized starch is not self-suspending in water as it precipitates in aqueous mixture. In contrast to this, gelatinized starch is suspended fairly readily in water, and the well-known Stein-Hall process used this fact by first gelatinizing starch in an aqueous medium and then adding ungelatinized starch which sticks to the gelatinized starch and is in this manner kept suspended in the aqueous medium. In other words, these known adhesives contain two different starch components, the gelatinized one acting as a "carrier" for the ungelatinized component.

The Danish Patent No. 125 428 discloses an adhesive which only contains one starch component which is partly swelled, i.e. it is only partly gelatinized to such a small extent that practically no ruptures occur on the individual starch grains, but on the other hand, a certain loss in the double refraction of the grains may take place. This adhesive is characterized by consisting of partly swollen starch, water and alkali in such proportions that the mixture contains between 10 and 40% by weight of starch solids, and has a pH value between 8 and 13, a gel point between 57° and 72°C and a Stein-Hall viscosity between 20 and 90 seconds.

Today, corrugated cardboard is made with these known adhesives at machine rates of up to 200 to 250 m/min, and 100 to 120 m/min in respect of heavier qualities. These high machine rates require that the adhesive, besides being viscous, has a very fast wet tack. By wet tack is understood the time that lapses from the application of the adhesive until fibre tearing occurs in the substrate applied. It is constantly desired to increase machine rates in the making of corrugated cardboard, and, in fact, machines are constructed which can process the paper at greater speeds. Using carrier starch systems, R.H. Williams *et al.* investigated whether the wet tack of the adhesive could be improved by varying the nature of the carrier starch, TAPPI, Volume 60, No. 4, April 1977, pages 86—89. The results obtained from these investigations indicated that the nature of the carrier starch can influence combiner speed. In practice, however, the wet tack obtainable with these known adhesives sets a limit to the production rate of corrugated cardboard at said speeds. Furthermore, the wet tack of the adhesive depends directly upon the heat added, the pressure applied and the gelatinization rate of the adhesive. By gelatinization rate is understood the rate at which the normal viscosity of the adhesive at the temperature of application is increased to the viscosity that produces fibre tearing. As the heat and pressure applied in a given machine are constant, it is thus the gelatinization rate of the adhesive which decides its wet tack and thereby the production rate of corrugated cardboard.

GB—A—2,003,629 discloses a starch-based adhesive composition which can be used in low film thicknesses. The advantage in using thin adhesive films is that the amount of water to be evaporated is reduced thereby reducing energy consumption and enabling the production of combined boards having better warp control. The composition disclosed comprises a viscosity controlled mixture of a lyophilic colloid, partially gelatinized starch and water. However, when using these compositions, it is not possible to achieve greatly increased machine speeds.

Contrary to the previous assumption, viz. that completely gelatinized starch practically does not contribute to the wet tack of the adhesive, it has now surprisingly been found that an adhesive with a greatly increased gelatinization rate and thereby shortened wet tack can be obtained by adding completely gelatinized starch to said one-component-adhesive containing partly swollen starch.

The present invention provides an adhesive consisting of starch, water and alkali in such proportions that the mixture contains from 10 to 40% by weight of starch solids and has a pH value in the range of from 8 to 13 and a gel point in the range of from 52 to 75°C, wherein the starch consists of completely gelatinized starch and partially gelatinized starch in a weight ratio of from 0.2:100 to 2:1, characterised in that the ratio of completely gelatinized starch to partially gelatinized starch and the degree of gelatinization of the partially gelatinized starch is so adapted that the Stein-Hall viscosity of the adhesive is from 50 to 120 seconds.

The gelatinization rate of the adhesive is measured in a standard Brabender viscosimeter and is stated in Brabender units per minute (BU/min.). It has been found that in the ordinary adhesives it is only possible to obtain gelatinization rates of up to 2000 BU/min., and by careful laboratory work of up to 2500 BU/min. As opposed to this, gelatinization rates of 2500 to 10 000 BU/min. have been achieved in the adhesive of the invention, and it is expected that approximately 15 000 BU/min. will be achieved.

The adhesive of the invention may be produced by adding a powder of completely gelatinized starch to a pre-produced one-component-adhesive containing partly swollen starch, and thoroughly dispersing the powder to produce a homogenous mixture. The powder is added in such amounts as will give an overall content of starch solids of between 10 and 40% by weight and a weight ratio of completely gelatinized to partly swollen starch of between 0.2:100 and 2:1.

The adhesive may be produced particularly advantageously by the process of the invention which is characterized by (a) maintaining a mixture of ungelatinized starch and water containing between 0.02 and 25% by weight of starch at a temperature between 20 and 100°C, optionally in the presence of an acid or a base, until the starch is completely gelatinized, (b) adding ungelatinized starch and optionally water so that the mixture contains a total of between 10 and 40% by weight of starch solids in a weight ratio of completely gelatinized starch to ungelatinized starch of between 0.2:100 and 2:1, adjusting pH to between 8 and 13, and maintaining the temperature of the mixture between 20 and 75°C until it has reached a Stein-Hall viscosity between 50 and 130 seconds, (c) adding a reaction inhibitor in an amount such that the gel point of the final composition is within the range of from 52 to 75°C and this composition has a Stein-Hall viscosity within the range of from 50 to 120 seconds.

This process offers the advantage that only one starting material is used, viz. ungelatinized starch so that it is not necessary to provide separate tanks for each component. Moreover, it ensures a completely homogenous dispersion of both components in the mixture.

The second advantage is also achieved if step (a) of the process of the invention is replaced by an addition of completely gelatinized starch powder in step (b).

The adhesive of the invention may be admixed in a manner known per se with a tackifier and/or preservative. Said agents may be added at any step of the process of the invention.

The type of starch used in the following examples is corn starch, but wheat, potato, tapioca and similar types of starch are equally useful. Said types of starch may be unmodified or chemically modified, e.g. oxidized, acid modified, enzyme modified or chemically derivatized, i.e. starch ethers and esters.

The reaction inhibitor in step (c) may actually consist of any addition or change which causes the properties of the reaction mixture to differ from those required for swelling the starch. In that respect it has been found particularly effective that the reaction inhibitor is borax, alum, another acid material, cold water or ice.

In the following examples the Stein-Hall viscosity is measured in a standard Stein-Hall cup at 38 to 43°C, and the viscosities found are stated in seconds. A Stein-Hall cup is a viscosimeter which measures the time it takes for 100 ml of adhesive to pass between two pins through a narrow opening. Distilled water at room temperature passes between the two pins in 15 seconds.

As mentioned, the gelatinization rate is measured in a standard Brabender viscosimeter, and the gelatinization rates found are stated in BU/min. A Brabender device measures the viscosity as a function of temperature and/or time. The viscosities found do not correspond to any other forms of viscosity measurements.

The base used in the examples is sodium hydroxide, but potassium hydroxide or other basic materials are equally useful.

The invention will be illustrated more fully in the following examples.

### Example 1

A mixture of 15 g of unmodified corn starch and 160 ml of water was heated to 95°C. After 10 minutes the starch was completely gelatinized, and 480 ml of cold water and 205 g of unmodified corn starch were added.

This suspension was admixed with 4 g of NaOH in 40 ml of water at 25°C. The mixture was stirred and allowed to react for 15 minutes, and then 3 g of boric acid were added, and after 15 minutes' stirring the mixture was ready. The resulting adhesive had a Stein-Hall viscosity of 50 s, a gel point of 65°C, a pH value of 11.9 and a gelatinization rate of 3400 BU/min.

### Example 2

This example illustrates the use of a completely gelatinized corn starch powder.

A mixture of 5 g of completely gelatinized corn starch and 95 g of unmodified corn starch was mixed with 310 g of water at a temperature of 38°C.

This suspension was admixed with 60 g of water containing 3 og of NaOH at a temperature of 54°C. The mixture was stirred and allowed to react for about 15 minutes, then 2 g of boric acid were added, and the mixture was stirred for 15 minutes. The resulting adhesive had a Stein-Hall viscosity of 52 s, a gel point of 62°C, and a gelatinization rate of 4200 BU/min.

The obtained adhesive was used for the production of a cardboard composed of 150 g/m² liner/112 g/m² fluting/110 g/m² testliner/112 g/m² fluting/150 g/m² liner, and the machine rate could be increased by 69% in comparison with a conventional "NO-CARRIER" adhesive having a gel point of 58°C and a gelatinization rate of 1800 BU/min. min.

## Example 3

This example illustrates the use of a preservative and a tackifier together with the completely gelatinized starch.

A mixture of 73 ml of water, 0.5 g of 37% formalin, 0.5 g of boric acid and 7 g of corn starch was heated to 95°C. After 10 minutes the starch was completely gelatinized, and 218 ml of cold water and 93 g of corn starch were added.

This suspension was admixed with 2 g of NaOH in 160 ml of water at 25°C. The mixture was stirred and allowed to react for 15 minutes, then 1 g of boric acid was added, and after 15 minutes' stirring the mixture was ready. The resulting adhesive had a Stein-Hall viscosity of 60 s, a gel point of 66°C, a pH value of 12 and a gelatinization rate of 3000 BU/min.

The obtained adhesive was used for the production of a cardboard composed of 175 g/m$^2$ liner/127 g/m$^2$ fluting/127 g/m$^2$ fluting/127 g/m$^2$ fluting/175 g/m$^2$ liner, and the machine rate could be increased by 38% in comparison with a conventional "NO-CARRIER" adhesive having a gel point of 57°C and a gelatinization rate of 1600 BU/min.

## Example 4

This example illustrates the use of completely gelatinized starch at the end of the process.

A mixture of 100 g of unmodified corn starch and 310 ml of water at 40°C was admixed with 2.9 g of NaOH in 60 ml of water at 52°C. The mixture was stirred and allowed to react for 30 minutes, then 1.7 g of boric acid, 0.7 g of formalin and 2.5 g of completely gelatinized corn starch were added, and after 20 minutes' stirring the mixture was ready. The resulting adhesive had a Stein-Hall viscosity of 60 s, a gel point of 63°C, a pH value of 12.2 and a gelatinization rate of 4600 BU/min.

## Example 5

This example illustrates the production of an adhesive having a high gel point.

A mixture of 0.5 g of completely gelatinized corn starch and 100 g of unmodified corn starch was mixed with 310 ml of water at a temperature of 39°C.

This suspension was admixed with 60 g of water containing 2.9 g and NaOH at a temperature of 53°C. The mixture was stirred and allowed to react for 20 minutes, then 1.7 g of boric acid, 0.7 g of formalin, 14.5 g of completely gelatinized corn starch and 5.6 g of citric acid were added, and after 30 minutes' stirring the mixture was ready. The resulting adhesive had a Stein-Hall viscosity of 85 s, a gel point of 75°C and a gelatinization rate of 3900 BU/min.

## Example 6

This example illustrates the use of a modified starch.

A mixture of 15 g of greatly oxidized corn starch and 160 ml of water was heated to 95°C. After 10 minutes the starch was completely gelatinized, and 480 ml of cold water and 205 g of unmodified corn starch were added.

This suspension was admixed with 4.5 g of NaOH in 40 ml of water at 25°C. The mixture was stirred and allowed to react for 25 minutes, then 3 g of boric acid were added and after 30 minutes' stirring the mixture was ready. The resulting adhesive had a Stein-Hall viscosity of 62 s, a gel point of 62°C, a pH value of 12 and a gelatinization rate of 3300 BU/min.

## Example 7

This example illustrates the production of an adhesive having a low gel point.

A mixture of 15 g of completely gelatinized corn starch and 160 ml of water at a temperature of 20°C was admixed with 480 ml of water at 46°C and 205 g of unmodified corn starch.

This suspension was admixed with 4.5 g of NaOH in 40 ml of water at 30°C. The mixture reacted for 10 minutes, then 3 g of boric acid were added, and after 20 minutes' stirring the mixture was ready. The resulting adhesive had a Stein-Hall viscosity of 70 s, a gel point of 55°C, a pH of 12.2 and a gelatinization rate of 2400 BU/min.

## Example 8

This example illustrates the production of a mixture having a particularly high gelatinization rate.

A mixture of 100 g of unmodified corn starch and 310 ml of water at 38°C was admixed with 2.9 g of NaOH in 60 ml of water at 55°C. The mixture was stirred and allowed to react for 20 minutes, then 1.7 g of boric acid, 0.7 g of formalin, 5 g of completely gelatinized corn starch and 4.3 g of citric acid were added, and after 25 minutes' stirring the mixture was ready. The resulting adhesive had a Stein-Hall viscosity of 51 s, a gel point of 75°C, a pH value of 11.9 and a gelatinization rate of 7100 BU/min.

## Claims

1. An adhesive consisting of starch, water and alkali in such proportions that the mixture contains from 10 to 40% by weight of starch solids and has a pH value in the range of from 8 to 13 and a gel point in the range of from 52 to 75°C, wherein the starch consists of completely gelatinized starch and partially gelatinized starch in a weight ratio of from 0.2:100 to 2:1, characterised in that the ratio of completely gelatinized starch to partially gelatinized starch and the degree of gelatinization of the partially gelatinized starch is so adapted that the Stein-Hall viscosity of the adhesive is from 50 to 120 seconds.

2. An adhesive according to claim 1, characterised in that the starch is unmodified corn starch, and that the weight ratio of completely gelatinized starch to partially gelatinized starch is from 0.5:100 to 1:1.

3. A process for producing an adhesive according to claims 1 or 2, characterised by:—

(a) maintaining a mixture of ungelatinized starch and water containing between 0.02 and 25% by weight of starch at a temperature between 20 and 100°C, optionally in the presence of an acid or a base, until the starch is completely gelatinized;

(b) combining completely gelatinized starch, ungelatinized starch and water in such proportions that the mixture contains a total of from 10 to 40% by weight of starch solids in a weight ratio of completely gelatinized starch to ungelatinized starch of from 0.2:100 to 2:1, adjusting the pH to a value in the range of from 8 to 13 and maintaining the temperature of the mixture within the range of from 20 to 75°C until it has reached a Stein-Hall viscosity of from 50 to 130 seconds, whereby the ungelatinized starch has become partially gelatinized; and then

(c) terminating the gelatinization reaction by adding a reaction inhibitor in an amount sufficient to result in the final composition having a gel point within the range of from 52 to 75°C and a Stein-Hall viscosity of from 50 to 120 seconds.

4. A process according to claim 3, characterised in that step (a) is replaced by a step of adding completely gelatinized starch powder in step (b).

## Patentansprüche

1. Klebemittel bestehend aus Stärke, Wasser und Alkali in solchen Mengenverhältnissen, dass das Gemisch 10 bis 40 Gewichtsprozent Stärke in fester Form enthält, einen pH-Wert im Bereich 8—13 sowie einen Erweichungspunkt im Bereich zwischen 52 und 75°C aufweist, wobei die Stärke aus vollständig gelatinierter Stärke und teilweise gelatinierter Stärke im Gewichtsverhältnis zwischen 0,2:100 und 2:1 besteht, dadurch gekennzeichnet, dass das Verhältnis zwischen völlig gelatinierter Stärke und teilweise gelatinierter Stärke sowie der Gelatinierungsgrad der teilweise gelatinierten Stärke so bemessen sind, dass die Stein-Hall Viskosität des Klebemittels zwischen 50 und 120 Sekunden beträgt.

2. Klebemittel nach Anspruch 1, dadurch gekennzeichnet, dass die Stärke unmodifizierte Maisstärke ist, und dass das Gewichtsverhältnis vollständig gelatinierte Stärke: teilweise gelatinierte Stärke 0,5:100 bis 1:1 beträgt.

3. Verfahren zur Herstellung des Klebemittels gemäss Anspruch 1 oder 2, dadurch gekennzeichnet,

(a) dass ein Gemisch aus nicht gelatinierter Stärke und Wasser mit 0,02 bis 25 Gewichtsprozent Stärke gewünschtenfalls in Gegenwart einer Säure oder Base auf einer Temperatur zwischen 20 und 100°C gehalten wird, bis die Stärke vollständig gelatiniert ist,

(b) dass völlig gelanierte Stärke, nicht gelatinierte Stärke und Wasser in solchen Verhältnissen zusammengeführt werden, dass das Gemisch insgesamt zwischen 10 und 40 Gewichtsprozent Stärke in fester Form bei einem Gewichtsverhältnis zwischen gelatinierter Stärke und nichtgelatinierter Stärke zwischen 0,2:100 und 2:1 enthält, der pH-Wert im Bereich zwischen 8 und 13 eingestellt wird und die Temperatur des Gemisches im Bereich zwischen 20 und 75°C gehalten wird, bis das Gemisch eine Stein-Hall Viskosität zwischen 50 und 130 Sekunden erlangt hat, wodurch die nicht gelatinierte Stärke teilweise gelatiniert worden ist, und

(c) dass die Gelatinierungsreaktion durch Zusetzen eines Reaktionsinhibitors in solcher Menge beendet wird, dass das fertige Gemisch einen Erweichungspunkt im Bereich zwischen 52 und 75°C und eine Stein-Hall Viskosität zwischen 50 und 120 Sekunden aufweist.

4. Verfahren nach Anspruch 3, dadurch gekennzeichnet, dass die Verfahrensstufe (a) durch den Zusatz völlig gelatinierter Stärke in der Verfahrensstufe (b) ersetzt wird.

## Revendications

1. Adhésif composé d'amidon, d'eau et d'un alcali dans des proportions choisies de manière que le mélange contienne 10 à 40 % en poids de matières solides amylacées et qu'il ait un pH de valeur comprise dans l'intervalle de 8 à 13 et un point de gélification dans l'intervalle de 52 à 75°C, l'amidon consistant en amidon entièrement gélatinisé et en amidon partiellement gélatinisé dans un rapport en poids de 0,2:100 à 2:1, caractérisé en ce que le rapport de l'amidon complètement gélatinisé à l'amidon partiellement gélatinisé et le degré de gélatinisation de l'amidon partiellement gélatinisé sont adaptés de manière que la viscosité Stein-Hall de l'adhésif ait une valeur de 50 à 120 secondes.

2. Adhésif suivant la revendication 1, caractérisé en ce que l'amidon est de l'amidon de maïs non modifié et en ce que le rapport en poids de l'amidon entièrement gélatinisé à l'amidon partiellement gélatinisé a une valeur de 0,5:100 à 1:1.

3. Procédé de production d'un adhésif suivant la revendication 1 ou 2, caractérisé par:

(a) le maintien d'un mélange d'amidon non gélatinisé et d'eau contenant entre 0,02 et 25 % en poids d'amidon à une température comprise entre 20 et 100°C, éventuellement en présence d'un acide ou d'une base, jusqu'à ce que l'amidon soit entièrement gélatinisé;

(b) la réunion d'amidon entièrement gélatinisé, d'amidon non gélatinisé et d'eau dans des proportions choisies de manière que le mélange contienne un total de 10 à 40 % en poids de matières solides amylacées dans un rapport en poids de l'amidon entièrement gélatinisé à l'amidon non gélatinisé de 0,2:100 à 2:1, l'ajustement du pH à une valeur comprise dans l'intervalle de 8 à 13 et le maintien de la température du mélange dans l'intervalle de 20 à 75°C jusqu'à ce qu'il ait atteint une viscosité Stein-Hall de 50 à 130 secondes, l'amidon non gélatinisé étant ainsi devenu partiellement gélatinisé, puis

(c) l'arrêt de la réaction de gélatinisation par l'addition d'un inhibiteur de réaction en une quantité suffisante pour que la composition finale ait un point de gélification dans l'intervalle de 52 à 75°C et une viscosité Stein-Hall de 50 à 120 secondes.

4. Procédé suivant la revendication 3, caractérisé en ce que l'étape (a) est remplacée par une étape d'addition d'amidon entièrement gélatinisé en poudre dans l'étape (b).